# EUROPÄISCHE PATENTSCHRIFT

(11) **EP 3 133 825 B1**
(45) Veröffentlichungstag und Bekanntmachung des Hinweises auf die Patenterteilung: **12.01.2022**
(21) Anmeldenummer: 16001793.5
(22) Anmeldetag: 12.08.2016
(51) Int. Cl.: H04Q 9/00, G01D 4/02, G01D 4/00

(54) **BIDIREKTIONALES FUNK-DATENÜBERTRAGUNGSVERFAHREN**
BIDIRECTIONAL WIRELESS DATA TRANSMISSION METHOD
PROCEDE DE TRANSMISSION RADIO BIDIRECTIONNELLE DE DONNEES

(30) Priorität: 19.08.2015 DE 102015010944
(43) Veröffentlichungstag der Anmeldung: 22.02.2017
(73) Patentinhaber: Diehl Metering Systems GmbH, 90451 Nürnberg (DE)
(72) Erfinder: PETKOV, Hristo, DE - 90425 Nürnberg (DE); LAUTENBACHER, Thomas, DE - 91058 Erlangen (DE); KAUPPERT, Thomas, DE - 90455 Nürnberg (DE); GOTTSCHALK, Klaus, DE - 90610 Winkelhaid (DE)
(74) Vertreter: Diehl Patentabteilung

(56) Entgegenhaltungen:
- EP-A2- 2 360 484
- EP-A2- 2 395 686
- WO-A1-2015/096916
- US-A1- 2011 140 909
- US-A1- 2015 035 682
- RACHOD PATACHAIANAND ET AL: "Performance study of new adaptive power control algorithm", COMMUNICATIONS AND INFORMATION TECHNOLOGIES, 2007. ISCIT '07. INT ERNATIONAL SYMPOSIUM ON, IEEE, PI, 1 October 2007 (2007-10-01), pages 505-510, XP031166516, DOI: 10.1109/ISCIT.2007.4392071 ISBN: 978-1-4244-0976-1

## Beschreibung

Die Erfindung betrifft ein Verfahren zu bidirektionaler Funkverbindung gemäß dem Oberbegriff des Patentanspruches 1, wie es aus der EP 2 395 686 A2 bekannt ist.

Bei jenem Verfahren handelt es sich nicht um ein Mobilfunksystem, dessen, regelmäßig mobiles, Endgerät mit einer regelmäßig stationären Zellen-Basisstation kommuniziert. Dafür werden nach der WO 2015/096916 A1 in der Zelle mehrere unterschiedliche Mobilfunk-Standards betrieben, etwa GSM, UMTS, LTE. Das Endgerät und dementsprechend auch die Basisstation sind dafür ausgelegt, in jedem der angebotenen Standards miteinander kommunizieren zu können. Aus den angebotenen Standards trifft ein Algorithmus eine Auswahl für die aktuell aufzubauende Mobilfunkverbindung.

Auch die Arbeit RACHOD PATACHAIANAND ET AL: "Performance study of new adaptive power control algorithm", COMMUNICATIONS AND INFORMATION TECHNOLO-GIES, 2007. ISCIT '07. INTERNATIONAL SYMPOSIUM ON, IEEE, PI, 1. Oktober 2007 (2007-10-01), Seiten 505-510, XP03 1166516, DOI: 10.1109/ISCIT.2007.4392071. ISBN: 978-1-4244-0976-1 befasst sich mit dem Mobilfunk, dort mit der Besonderheit hoher Geschwindigkeit des mobilen Endgerätes relativ zur Basisstation. Wenn aufgrund guter Empfangsverhältnisse die Sendeleistung des mobilen Endgerätes pegelabhängig schrittweise verändert werden könnte, befindet sich das Endgerät bereits unter geänderten Verbindungsparametern in Kommunikation mit der bisherigen oder mit der benachbarten Basisstation, noch ehe die zuvor avisierte Optimierungsmaßnahme durchgeführt werden konnte. Ein komplexer dynamischer Leistungsregelkreis mit geschwindigkeitsabhängig variabler Schrittweite für die Leistungsoptimierung soll dagegen Abhilfe schaffen.

Bei dem erfindungsgemäß ausgelegten bidirektionalen unsynchronisierten Funk-Datenübertragungsverfahren etwa gemäß EP 2 395 686 A2 handelt es sich dagegen nicht um Kommunikation in einem Mobilfunk-Standard, sondern es dient dem Übermitteln von Messwert-Datentelegrammen mittels Zähler-Sendern über Uplink-Funkverbindungen an einen Konzentrator-Empfänger. Außerdem existieren Downlink-Funkverbindungen eines Konzentrator-Senders zu Zähler-Empfängern. Die in den Konzentratoren zwischengespeicherten Verbrauchsinformationen erfasster Zähler werden für ihre weitere Verarbeitung, etwa zur Verbrauchsabrechnung, mittels beispielsweise eines stationär installierten, hier so genannten externen Empfängers abgefragt und von diesem dann per Funk an eine Abrechnungszentrale übermittelt. Dieses Abfragen funktioniert aber nur, wenn der externe Empfänger in Bezug auf die räumliche Verteilung der zu erfassenden Konzentratoren funktechnisch hinreichend günstig platziert ist. Das kann der Monteur feststellen, indem er am vorgesehenen Montageort des externen Empfängers einen Kanalscan durchführt und hinsichtlich der dort gegebenen Funkbelastung auswertet. Zum Vermeiden von Kollisionsproblemen in stark belegten Kanälen wird der vorgesehene Montageort für den externen Empfänger dann an einen anderen Ort verlegt, an dem wieder vor der Montage eine Kanalscan-Auswertung erfolgt. Zusätzlich kann die Empfindlichkeit dieses externen Empfängers über Eingriff in dessen Empfangsschaltung oder über die Ausrichtung von dessen Empfangsantenne abgesenkt werden. Wenn von diesem externen Empfänger eine Einflussnahme auf den Datensender eines der Konzentratoren möglich ist, kann auch vorgesehen sein, die vom Konzentrator gelieferten Funktelegramme weniger häufig oder verkürzt zu senden, um die Kollisionsgefahr beim Auslesen des Konzentrators seitens des externen Empfängers zu senken. Eine etwaige Kommunikation zwischen dem externen Empfänger und einem der vom Konzentrator erfassten Zähler ist nicht angesprochen.

Bei der Funkübertragung von Datentelegrammen nach der US 2011/0140909 A1 werden die Zähler-Daten periodisch auf größere Entfernungen über ein drahtloses Netz wie das Internet an die Abrechnungszentrale übermittelt. Dafür ist ein Protokollkonverter (Gateway) zum Umsetzen der Zähler-Datentelegramme vorgesehen, die in einem Konzentrator zwischengespeichert sind. Wenn ein Quittungssignal vom Protokollkonverter an die Zähler ausbleibt, werden deren Sender auf eine bezüglich der Netzgegebenheiten nicht näher spezifizierte optimale Sendeleistung eingestellt. Bei Ausbleiben eines Datentelegrammes wird dessen Informationsumfang in der Folgeperiode gesteigert.

Auch das in der EP 2 360 484 A2 dargestellte System kann die Anordnung einer Mehrzahl von verteilt eingesetzten Strom-, Fluid- (wie Gas- oder Wasser-) beziehungsweise Wärmemengen-Verbrauchserfassungsgeräten aufweisen, nachstehend wieder einfach als Zähler bezeichnet. Von denen ist jeder mit einem Sender ausgestattet, um per Nahbereichsfunk über eine Uplink-Funkverbindung seine individualisierten, digitalisierten Messwerte als so genannte Telegramme an ein abseits betriebenes, nachstehend als Konzentrator (RDC, radio data concentrator) bezeichnetes Empfangs-Zentralgerät zu übermitteln. Solche Messwertübertragungen erfolgen üblicherweise unsynchronisiert mit gleichen Leistungsdaten und konstanten Längen der mehrfach wiederholten Telegramme. Insbesondere für eine Verbrauchsabrechnung werden die im Konzentrator zwischengespeicherten und gegebenenfalls umkodierten Messwerte periodisch von einem Servicemitarbeiter ausgelesen - wenn der Konzentrator nicht zu quasi-kontinuierlicher Datenübertragung über eine Kommunikationsverbindung, wie zum Beispiel über Mobilfunknetz, WLAN oder Ethernet zu einem Massenspeicher insbesondere bei einem Versorgungsunternehmen in Kontakt steht.

Ein derartiges System kann mittelsTransceivern bei den Zählern und beim Konzentrator für bidirektionale Datenübertragungen ausgelegt sein, so dass Datenübertragungen über Funkverbindungen außer von den Zähler-Sendern zum Konzentrator-Empfänger (Uplinks) auch von einem Konzentrator-Sender zu Zähler-Empfängern (Downlinks) erfolgen können. Die Downlink-Funkverbindungen nach dem vorbekannten Verfahren können unter anderem zur Tarifumsteuerung von den Zählern zugeordneten Energieverbrauchern eingesetzt werden. Eine Downlink-Verbrauchersteuerung kann zweckmäßigerweise über ein für höhere Sendeleistung zugelassenes Frequenzband erfolgen, verglichen mit den Uplink-Funkverbindungen zur Messdatenübertragung.

Vorliegend geht es stattdessen um die Qualität der Uplink-Funkverbindungen. Die bewertet sich etwa über den Empfangspegel und / oder über den Signal-/Rausch-Abstand im Empfangssignal. Sie hängen von verschiedenen konstanten und variablen Gegebenheiten ab. Solche sind einerseits etwa unterschiedliche gebäudebedingte Dämpfungen je nach den Abschirmverhältnissen und Entfernungen zwischen den einzelnen Montageorten der Zähler und dem Montageort des Konzentrators; und es sind andererseits etwa am Empfangsort im Empfangskanal einander momentan überlagernde pegel-stärkere und -schwächere Uplink-Funkverbindungen. Deshalb kann es durchaus über verschiedene dieser Funkverbindungen nur selten, in Extremfällen praktisch gar nicht zu auswertbarem Empfang von Messwert-Telegrammen kommen.

Solche Effekte zu vermeiden, ist die vorliegender Erfindung zugrunde liegende technische Problemstellung; nämlich insbesondere unter Berücksichtigung dessen, dass einerseits gemäß aktuellem Standard die Zähler samt ihren Sendern und Empfängern (Transceivern) mit nicht austauschbaren Energiequellen (Primärbatterien) bestückt sind, die gewöhnlich einen zehnjährigen ununterbrochenen Betrieb gewährleisten sollen, was bereits einer bloßen Steigerung der Sendeleistung schwach empfangbarer Sender enge Grenzen setzt; und dass andererseits gemäß den einschlägigen Normen bei Nutzung der so genannten ISM-Bänder für Nahbereichs-Datenfunk Nutzungsbegrenzungen etwa hinsichtlich Pegels, Frequenzbandbreite und relativer Einschaltdauer (sog. Duty Cycle) in deren einzelnen Kanälen einzuhalten sind.

Gelöst wird diese Aufgabe gemäß den im Patentanspruch 1 angegebenen Merkmalen. Danach werden vor allem, funkgesteuert vom Konzentrator aus, Uplink-Sendeparameter der aktuell besser empfangbaren Sender variiert, bis sie, statistisch bewertet, ungefähr auf die Empfangsgegebenheiten derjenigen Sender nivelliert sind, die noch ausreichende Empfangsfeldstärke für sichere Messwertübertragungen liefern.

Weil danach nun jedenfalls keine relativ zu starken Empfangsfeldstärken von Uplink-Sendern schwächere Empfangsfeldstärken mehr dominierend überlagern, werden insofern alle, nach dem Zufallsprinzip (random access) ihre Messwerte übermittelnden, Sender vom Konzentrator etwa gleich gut empfangen; also ohne dass aus Empfänger-Sicht eine schwache Empfangsfeldstärke von einer sie überlagernden starken vorübergehend oder gar praktisch dauernd unterdrückt würde.

Dazu ist der Konzentrator für Einflussnahmen im Downlink mittels Steuersignalen auf die unterschiedlichen Zähler-Sender nach Maßgabe von automatischen Bewertungen von Qualitätskriterien der von jenen uplink empfangenen Messwert-Telegramme eingerichtet.

Solche Bewertungen können im Konzentrator implementierte, gängige statistische Beurteilungsverfahren liefern, wie Rauschabstandswerte (etwa CQI channel quality indicator oder PER packed error rate) als Qualitätskriterien.

Eine Qualitätsbewertung kann aber auch schon daraus resultieren, lediglich zu zählen, wie viel häufiger brauchbare Messwerte von einem bestimmten Sender uplink empfangen werden; verglichen mit einem momentan oder standardmäßig ausgewählten Uplink-Referenzsender, dessen Messwerte dagegen nur unsicherer empfangen werden. Dann kann beim besser empfangbaren Sender die Anzahl der Telegrammwiederholungen im Sendeintervall, vom Konzentrator ferngesteuert, auf einen Festwert oder, nach Maßgabe jenes Verhältnisses, prozentual verringert werden. Dadurch werden die schlecht empfangbaren Messwerte weniger häufig von den stärkeren Empfangsfeldstärken dieses dominierenden Uplink-Senders überlagert, also letztlich zuverlässiger empfangen. Zugleich entlastet die verminderte Aufeinanderfolge (duty cycle) der Telegrammübermittlungen vom besser empfangbaren Uplink-Sender die Kanalbelastung.

Zusätzlich oder stattdessen kann gemäß einer Weiterentwicklung der erfindungsgemäßen Lösung die Sendeleistung des gut empfangbaren Uplink-Senders reduziert werden, im Extremfall so weit, dass er nicht besser als ein schlecht empfangbarer Sender - oder sogar nur gerade noch - verwertbare Messwert-Telegramme empfangen lässt. Die Kollision der dann ständig etwa gleich gut empfangbaren Telegramme lässt sich empfangsseitig durch bekannte Methoden der Signalverarbeitung und -auswertung beherrschen, so dass letztlich alle Uplink-Sender verwertbaren Messwert-Empfang liefern. Eine Entlastung der Funkkanal-Belegung beruht hier auf einem Reduzieren von unnötig starken Sendepegeln.

Statt oder zusätzlich zu den beiden vorgenannten Optionen kann weiterhin das Aussenden der Messwerte der vom Konzentrator gut zu empfangenden Uplink-Sender mit erhöhter Datenrate erfolgen. Aufgrund der höheren Datenrate verkürzen sich die Bitimpulsdauern und bei gleich bleibendem Dateninhalt die wirksamen Telegrammdauern. Als Kriterium zur Erhöhung der Datenrate werden die Empfangsqualität der Telegramme am Konzentrator und deren oben genannten Kriterien zugrunde gelegt. Überlagern diese im Vergleich kurzen Telegramme mit erhöhter Datenrate die im Vergleich dazu langen Telegramme mit normaler Übertragungsrate bei der Funkübertragung, so können die Daten beider Telegramme mithilfe von Fehlerkorrekturverfahren rekonstruiert und korrekt empfangen werden. Die Einstellung der Datenrate erfolgt in der Art und Weise, dass bei diesen Überlagerungen alle beteiligten Telegramme am Empfänger rekonstruiert werden können. Mit dieser Maßnahme werden der Datendurchsatz im System und somit die Anzahl der verwertbaren Messwerttelegramme erhöht. Außerdem werden durch die kürzeren Telegramme die Kanalbelastung und der Energieverbrauch dieser Uplink-Sender verringert.

Außer zur Steigerung der Empfangszuverlässigkeit, mit der Folge rascheren Abarbeitens der Kommunikationsverbindungen, führt also schon jede einzelne der vorstehend aufgezeigten Maßnahmen dazu, dass die Kanalbelegung des Uplink-Kanales entlastet wird; und gleichzeitig wird die Energiequelle des Uplink-Senders geschont, deren vorgegebene Lebensdauer deshalb zuverlässiger erreicht wird.

Als zusätzlicher, nützlicher Effekt der Übertragungsoptimierungen kann geltend gemacht werden, dass die im Mittel reduzierten resultierenden Sendepegel die elektromagnetische Umweltbelastung mindern.

Es kann erfindungsgemäß außerdem, über die Uplink-Eingriffe hinaus, auf die Downlink-Funkverbindungen zur Übertragung von Steuersignalen des Konzentrators zu den Zähler-Sendern Einfluss genommen werden. Dafür wird in als solcher bekannter Weise davon ausgegangen, dass der Uplink- und der Downlink-Datenverkehr in unterschiedlichen Funkkanälen erfolgt; wobei über die in den so genannten ISM-Bändern für derartige Dienste zur Verfügung stehenden einzelnen Funkkanälen, abgesehen von den Einschaltdauern (duty cycles), Sendeleistungen unterschiedlicher maximaler Stärke zugelassen sind.

Bei den zählerseitigen Empfängern wird die jeweilige, momentane Übertragungsqualität des downlink empfangenen Konzentrator-Steuersignales, wieder über Standardverfahren wie CQI, RSSI oder PER, beurteilt und an den Transceiver des Konzentrators rückgemeldet. In diesem ergibt sich daraus, welche der obigen Optionen für die Uplink-Messwertübermittlung momentan den Datendurchsatz optimieren wird. Außerdem kann je nach den aktuellen Gegebenheiten die Downlink-Sendeleistung unter Umschalten auf einen Kanal angepasster Zulässigkeit reduziert oder erhöht werden. Der jeweilige zählerseitige Empfänger erhält vom Konzentrator die Nachricht, also die Anweisung, auf welchen Kanal er zu künftigem Downlink-Empfang etwaiger Steuersignale vom Konzentrator umschalten soll.

Um also in einem bidirektionalen Datenübertragungs-Funksystem Messwert-Datentelegramme von Zähler-Sendern über Uplink-Funkverbindungen an einen Konzentrator zuverlässiger empfangen zu können, wird erfindungsgemäß die Qualität von besser zu empfangenden Uplink-Funkverbindungen intelligent reduziert, um die Gesamtzuverlässigkeit eines Systems mit vielen Zählern und Konzentratoren zu erhöhen. Dafür wirkt der Konzentrator mit Steuersignalen über Downlink-Funkverbindungen auf Parameter, wie Sendeleistung oder Telegramm-Management, des Betriebes von Uplink-Sendern ein. Beim Konzentrator automatisch gewinnbare Uplink-Qualitätskriterien sind insbesondere absolute oder relative Pegel, Rauschen und relative Anzahl empfangbarer Datentelegramme.

## Patentansprüche

1. Bidirektionales Funk-Datenübertragungsverfahren zu unsynchronisiertem Übermitteln von Messwert-Datentelegrammen von Zähler-Sendern über Uplink-Funkverbindungen an einen Konzentrator-Empfänger und mit Downlink-Funkverbindungen eines Konzentrator-Senders auf Zähler-Empfänger, **dadurch gekennzeichnet, dass** beim Konzentrator eine Information über die Qualität einer empfangbaren Uplink-Funkverbindung im Vergleich zu wenigstens einer anderen empfangbaren Uplink-Funkverbindung programmgesteuert ermittelt und über die Downlink-Funkverbindung wenigstens ein Parameter wenigstens einer der Uplink-Funkverbindungen in dem Sinne beeinflusst wird, dass deren Absenken in Richtung auf die Qualität einer schlechteren aber noch funktionstüchtigen Uplink-Funkverbindung erfolgt.

2. Verfahren nach Anspruch 1, **dadurch gekennzeichnet, dass** ein Parameter die Sendeleistung ist.

3. Verfahren nach einem der vorangehenden Ansprüche, **dadurch gekennzeichnet, dass** ein Parameter die Anzahl an Telegrammwiederholungen ist.

4. Verfahren nach einem der vorangehenden Ansprüche, **dadurch gekennzeichnet, dass** ein Parameter die Telegrammlänge ist.

5. Verfahren nach einem der vorangehenden Ansprüche, **dadurch gekennzeichnet, dass** Empfangspegel Qualitätskriterien sind.

6. Verfahren nach einem der vorangehenden Ansprüche, **dadurch gekennzeichnet, dass** Rauschabstandsgegebenheiten Qualitätskriterien sind.

7. Verfahren nach einem der vorangehenden Ansprüche, **dadurch gekennzeichnet, dass** Anzahlen brauchbar empfangener Messwerte Qualitätskriterien sind.

8. Verfahren nach einem der vorangehenden Ansprüche, **dadurch gekennzeichnet, dass** Sendeparameter im Verhältnis zu Qualitätskriterien variiert werden.

9. Verfahren nach einem der vorangehenden Ansprüche, **dadurch gekennzeichnet, dass** Downlink-Funkverbindungen in einem für, im Vergleich zu den Uplink-Funkverbindungen, höhere Sendeleistungen zugelassenen Frequenzband erfolgen.

10. Verfahren nach einem der vorangehenden Ansprüche, **dadurch gekennzeichnet, dass** bei empfangsseitiger Überlagerung von Telegrammen Fehlerkorrekturverfahren eingesetzt werden.

11. Verfahren nach Anspruch 10, **dadurch gekennzeichnet, dass** der Empfang eines im Vergleich kurzen Telegrammes bei mindestens einer Überlagerung mit einem im Vergleich längeren Telegramm aufgrund der Fehlerkorrektur nicht gestört wird.

12. Verfahren nach Anspruch 10, **dadurch gekennzeichnet, dass** die Fehlerkorrektur sowie die ganze Bitübertragungsschicht einen negativen Störabstand unterstützt, so dass Daten der mit negativem Störabstand empfangenen Telegramme fehlerfrei übermittelbar sind.

13. Verfahren nach Anspruch 10, **dadurch gekennzeichnet, dass** die Fehlerkorrektur sowie die ganze Bitübertragungsschicht einen positiven Störabstand unterstützen.

14. Verfahren nach Anspruch 12, **dadurch gekennzeichnet, dass** bei Überlagerung von zwei Telerammen deren Pegeldifferenz über eine Leistungsregelung so gesteuert wird, dass die Pegeldifferenz kleiner als der negierte Signal-zu-Rausch-Abstand der Bitübertragungsschicht ist, um beide Telegramme zu empfangen.

15. Verfahren nach Anspruch 13, **dadurch gekennzeichnet, dass** bei Überlagerung von zwei Telegrammen die Pegeldifferenz über Leistungsregelung so gesteuert wird, dass sie größer als der Signal-zu-Rausch-Abstand der Bitübertragungsschicht ist, um wenigstens eines der beiden Telegramme zu empfangen.

16. Verfahren nach einem der vorangehenden Ansprüche, **dadurch gekennzeichnet, dass** eines der beiden Telegramme, das zu einem Fremdsystem gehört, als Störsignal behandelt wird.

## Claims

1. Bidirectional wireless data transmission method for transmitting measured value data messages in an unsynchronized manner from meter transmitters via wireless uplink connections to a concentrator receiver and with wireless downlink connections of a concentrator transmitter to meter receivers, **characterized in that**, in the concentrator, information relating to the quality of a receivable wireless uplink connection compared with at least one other receivable wireless uplink connection is determined in a program-controlled manner and at least one parameter of at least one of the wireless uplink connections is influenced via the wireless downlink connection in the sense that it is reduced in the direction of the quality of a poorer but still functional wireless uplink connection.

2. Method according to Claim 1, **characterized in that** one parameter is the transmitting power.

3. Method according to either of the preceding claims, **characterized in that** one parameter is the number of message repetitions.

4. Method according to one of the preceding claims, **characterized in that** one parameter is the message length.

5. Method according to one of the preceding claims, **characterized in that** receive levels are quality criteria.

6. Method according to one of the preceding claims, **characterized in that** signal-to-noise ratio conditions are quality criteria.

7. Method according to one of the preceding claims, **characterized in that** the numbers of usably received measured values are quality criteria.

8. Method according to one of the preceding claims, **characterized in that** transmission parameters are varied in relation to quality criteria.

9. Method according to one of the preceding claims, **characterized in that** wireless downlink connections are implemented in a frequency band which is permitted for transmitting powers that are higher in comparison with the wireless uplink connections.

10. Method according to one of the preceding claims, **characterized in that** error correction methods are used in receive-side superimposition of messages.

11. Method according to Claim 10, **characterized in that** the reception of a comparatively short message is not adversely affected in the case of at least one superimposition with a comparatively longer message due to the error correction.

12. Method according to Claim 10, **characterized in that** the error correction and the entire physical layer support a negative signal-to-noise ratio so that data of the messages received with a negative signal-to-noise ratio are transmittable in an error-free manner.

13. Method according to Claim 10, **characterized in that** the error correction and the entire physical layer support a positive signal-to-noise ratio.

14. Method according to Claim 12, **characterized in that**, in the case of superimposition of two messages, their level difference is controlled via power regulation in such a way that the level difference is less than the negated signal-to-noise ratio of the physical layer in order to receive both messages.

15. Method according to Claim 13, **characterized in that**, in the case of superimposition of two messages, the level difference is controlled via power regulation in such a way that it is greater than the signal-to-noise ratio of the physical layer in order to receive at least one of the two messages.

16. Method according to one of the preceding claims, **characterized in that** one of the two messages belonging to an external system is treated as an interference signal.

## Revendications

1. Procédé de transmission radio bidirectionnelle de données pour la transmission non synchronisée de télégrammes de données de valeurs de mesure provenant d'émetteurs de compteur par des connexions radio de liaison montante à destination d'un récepteur de concentrateur et avec des connexions radio de liaison descendante d'un émetteur de concentrateur à un récepteur de compteur,
**caractérisé en ce que** sur le concentrateur, une information concernant la qualité d'une connexion radio de liaison montante pouvant être reçue est établie de manière commandée par programme en comparaison avec au moins une autre connexion radio de liaison montante pouvant être reçue, et la connexion radio de liaison descendante affecte au moins un paramètre d'au moins l'une des connexions radio de liaison montante dans ce sens que la rétrogradation de celle-ci est effectuée en direction de la qualité d'une connexion radio de liaison montante moins bonne mais toujours opérationnelle.

2. Procédé selon la revendication 1, **caractérisé en ce qu'**un paramètre est la puissance d'émission.

3. Procédé selon l'une quelconque des revendications précédentes, **caractérisé en ce qu'**un paramètre est le nombre de répétitions de télégramme.

4. Procédé selon l'une quelconque des revendications précédentes, **caractérisé en ce qu'**un paramètre est la longueur de télégramme.

5. Procédé selon l'une quelconque des revendications précédentes, **caractérisé en ce que** des niveaux de réception sont des critères de qualité.

6. Procédé selon l'une quelconque des revendications précédentes, **caractérisé en ce que** des conditions de rapport signal/bruit sont des critères de qualité.

7. Procédé selon l'une quelconque des revendications précédentes, **caractérisé en ce que** les nombres de valeurs de mesure reçues utiles sont des critères de qualité.

8. Procédé selon l'une quelconque des revendications précédentes, **caractérisé en ce que** des paramètres d'émission sont amenés à varier par rapport aux critères de qualité.

9. Procédé selon l'une quelconque des revendications précédentes, **caractérisé en ce que** des connexions radio de liaison descendante ont lieu dans une bande de fréquence autorisée pour des puissances d'émission supérieures en comparaison avec les connexions radio de liaison montante.

10. Procédé selon l'une quelconque des revendications précédentes, **caractérisé en ce que** des procédés de correction d'erreur sont mis en œuvre en cas de superposition de télégrammes côté réception.

11. Procédé selon la revendication 10, **caractérisé en ce que** la réception d'un télégramme relativement court n'est pas perturbée en raison de la correction d'erreur dans le cas d'au moins une superposition avec un télégramme relativement plus long.

12. Procédé selon la revendication 10, **caractérisé en ce que** la correction d'erreur ainsi que toute la couche physique prennent en charge un rapport signal/bruit négatif de sorte que des données des télégrammes reçus avec un rapport signal/bruit négatif peuvent être transmises sans erreur.

13. Procédé selon la revendication 10, **caractérisé en ce que** la correction d'erreur ainsi que toute la couche physique prennent en charge un rapport signal/bruit positif.

14. Procédé selon la revendication 12, **caractérisé en ce qu'**en cas de superposition de deux télégrammes, leur différence de niveau est commandée par une régulation de puissance de telle sorte que la différence de niveau est inférieure au rapport signal/bruit négatif de la couche physique afin de recevoir les deux télégrammes.

15. Procédé selon la revendication 13, **caractérisé en ce qu'**en cas de superposition de deux télégrammes, la différence de niveau est commandée par une régulation de puissance de telle sorte qu'elle est supérieure au rapport signal/bruit de la couche physique afin de recevoir au moins l'un des deux télégrammes.

16. Procédé selon l'une quelconque des revendications précédentes, **caractérisé en ce que** l'un des deux télégrammes qui appartient à un système externe est traité comme un signal parasite.
